# FASCICULE DE BREVET EUROPEEN

(11) **EP 1 193 953 B1**
(45) Date de publication et mention de la délivrance du brevet: **03.11.2004**
(21) Numéro de dépôt: 01202387.5
(22) Date de dépôt: 20.06.2001
(51) Int. Cl.: H04M 1/02

(54) **Appareillage électronique comportant un écran rétractable**
Elektronisches Gerät mit zusammenklappbarer Anzeigevorrichtung
Electronic device with collapsible display

(30) Priorité: 30.06.2000 FR 0008540; 24.04.2001 FR 0105504
(43) Date de publication de la demande: 03.04.2002
(73) Titulaire: Koninklijke Philips Electronics N.V., 5621 BA Eindhoven (NL)
(72) Inventeur: Lubowicki, Jean-Pierre, 75008 Paris (FR); Warner, Gavin, 75008 Paris (FR)
(74) Mandataire: Chaffraix, Jean

(56) Documents cités:
- WO-A-00/54480
- WO-A-97/31468
- WO-A-99/23800
- US-A- 5 450 619
- US-A- 6 128 475
- US-B1- 6 243 595
- PATENT ABSTRACTS OF JAPAN vol. 2000, no. 16, 8 mai 2001 (2001-05-08) & JP 2001 024762 A (MATSUSHITA ELECTRIC IND CO LTD), 26 janvier 2001 (2001-01-26)

## Description

L'invention concerne un appareillage électronique comportant un boîtier formé au moins de deux parties de boîtier dont une dite partie d'écran est solidaire d'un écran rétractable pouvant occuper une première position dite position repliée et une deuxième position dite déployée vis-à-vis d'une partie dite partie fixe, pour lequel ladite partie d'écran est montée sur des glissières en vue de permettre son déplacement, et pour lequel il est prévu des "points durs" lors du déplacement de ladite partie d'écran afin qu'elle puisse occuper des positions stables.

L'invention trouve des applications importantes lorsque, notamment, l'appareillage est du type radiotéléphone.

Un appareil de ce genre est connu du document de brevet W097/31468. Dans cet appareil, il peut arriver, par suite d'usure notamment, que le déplacement ne soit pas trop bien défini.

Pour que le déplacement soit bien défini, l'invention est remarquable en ce que les positions de l'écran entre deux positions sont assurées par des verrous déverrouillables par un bouton.

Selon une caractéristique importante de invention, un tel appareillage est remarquable en ce que dans la position dite repliée, la partie fixe masque partiellement l'écran.

Il est à noter que le masquage partiel de l'écran est décrit dans le document de brevet WO99/23800.L'invention propose un appareil du genre mentionné dans le préambule qui offre l'avantage que ledit déplacement soit assuré d'une manière efficace.

Selon une autre caractéristique importante de l'invention un tel appareil est remarquable en ce que les verrous permettent de désolidariser les deux parties du boîtier.

Ainsi, par la mesure préconisée par l'invention, l'utilisateur, par exemple dans le cadre où l'appareil est un téléphone mobile, a le choix entre deux modes de fonctionnement correspondant à ces deux positions. Lorsque l'appareil est en position repliée, l'appareil se comporte comme un appareil normal et peut recevoir des appels. Pour le gérer, l'utilisateur se sert de la partie visible de l'écran qui peut alors donner le nom de l'appelant ou la nature de l'appel ( petits messages ou autres). Lorsque l'appareil est en position déployée, l'utilisateur peut voir des images ou des informations telles que celles envoyées par le système WAP.

La description suivante, faite en regard des dessins ci-annexés, le tout donné à titre d'exemples non limitatifs fera bien comprendre comment invention peut être réalisée. Sur les dessins :
La figure 1 montre un appareillage électronique conforme à l'invention avec l'écran en position déployée,
La figure 2 montre un appareillage électronique conforme à l'invention avec l'écran en position repliée,
La figure 3 montre une vue éclatée de l'appareillage,
La figure 4 montre toujours en vue éclatée un détail de réalisation de l'appareillage conforme à l'invention,
La figure 5 montre comment les positions déployée et repliée sont détectées.
La figure 6 montre un deuxième exemple de réalisation d'un appareil conforme à l'invention montré en vue éclatée.
La figure 7 montre le fonctionnement de ce deuxième exemple de réalisation.
La figure 8 montre la disposition de verrous mis en oeuvre dans ce deuxième exemple de réalisation.
La figure 9 montre comment les connexions électriques sont réalisées par ce deuxième exemple de réalisation.

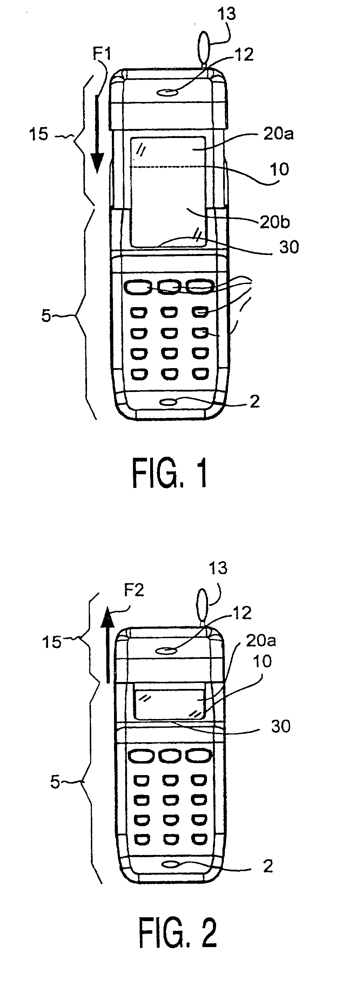

A la figure 1, on a représenté un appareil conforme à l'invention. Cet appareil comporte un clavier 1, un microphone 2 disposé sur une première partie de boîtier 5. L'appareil comporte, en outre, un écran 10, un écouteur 12 et une antenne 13 disposés sur une autre partie de boîtier 15. Cette partie 15 est susceptible de coulisser par rapport à la partie 5 jusqu'à venir à la position dite repliée, montrée à la figure 2, en partant de la position représentée sur cette figure 1 dite position déployée.

Sur cette figure 2 et les suivantes, les éléments communs à ceux de la figure 1 portent les mêmes références.

Conformément à invention, en position repliée une partie de l'écran 20a reste visible. Ainsi, l'écran se divise en deux parties 20a et 20b. La partie 20a est toujours visible quelle que soit la position de l'écran et la partie 20b se combine avec la partie 20a pour fournir à l'utilisateur un écran complet pour pouvoir, par exemple, visualiser des images WAP (système similaire à Internet mais adapté aux téléphones portables) ou autres. Les flèches F1 et F2 montrent respectivement dans quel sens il faut agir sur la partie 15 pour se mettre en position repliée et déployée. Une échancrure 30 a été ménagée dans la partie 5 de façon à rendre visible la partie d'écran 20a en position repliée.

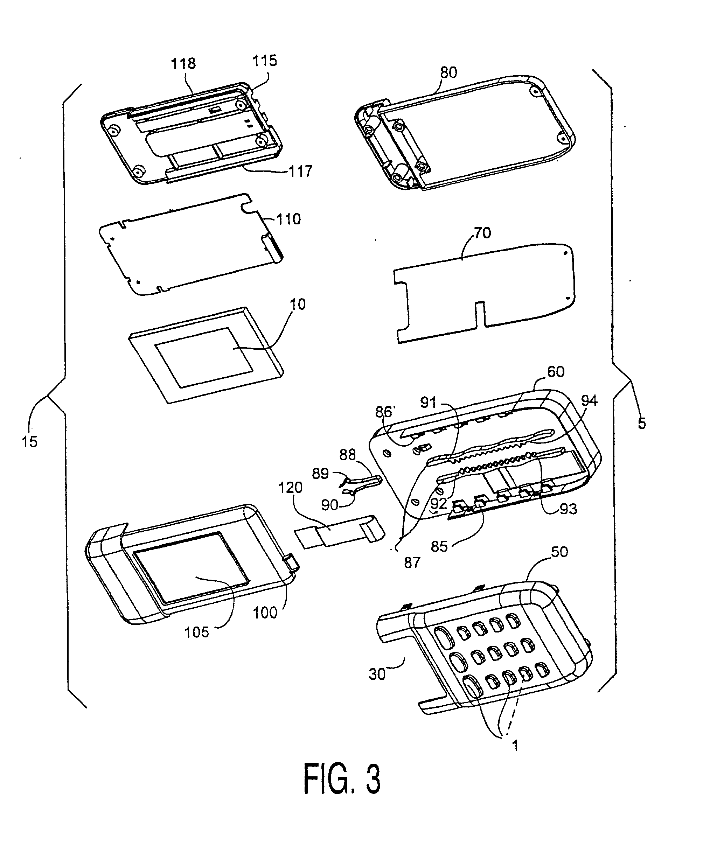

La figure 3 montre une vue éclatée de l'appareil conforme à l'invention. La partie de boîtier 5 se décompose en une face avant 50 sur laquelle sont placées les touches du clavier 1. C'est sur cette face avant qu'a été ménagée l'échancrure 30. Cette partie 5 comporte aussi un corps de boîtier 60 au dos duquel vient se fixer un circuit imprimé 70 et un couvercle 80 pouvant contenir un accumulateur pour alimenter l'appareil. Sur son devant sont disposées des glissières 85 et 86 pour maintenir la partie 15. Une crémaillères 87 est aussi placée avec un profil qui permet d'obtenir des points durs. Dans cette crémaillère peut se déplacer un système à ressort 88. Ce système est constitué d'une lame ayant une forme d'épingle présentant des protubérances 89 et 90 qui viennent s'encastrer dans des retraits 91 et 92 pour la position déployée et 93 et 94 pour la position repliée en assurant ainsi lesdits points durs.

La partie de boîtier 15 se compose d'une face avant 100 sur laquelle est ménagée une ouverture 105 qui permet de visualiser l'écran 10, à l'arrière duquel est placé un blindage 110. Le tout est recouvert à l'arrière par un couvercle 115. Le système de ressort est solidaire de cette partie 15. Une nappe 120, de conducteur souple mieux connu sous le nom de flex, permet les liaisons électriques entre la partie de boîtier 5 et la partie de boîtier 15. Sur ce couvercle 115 est disposé un système de guidage formé de rainures 117 et 118 qui viennent glisser sur les glissières 85 et 86.

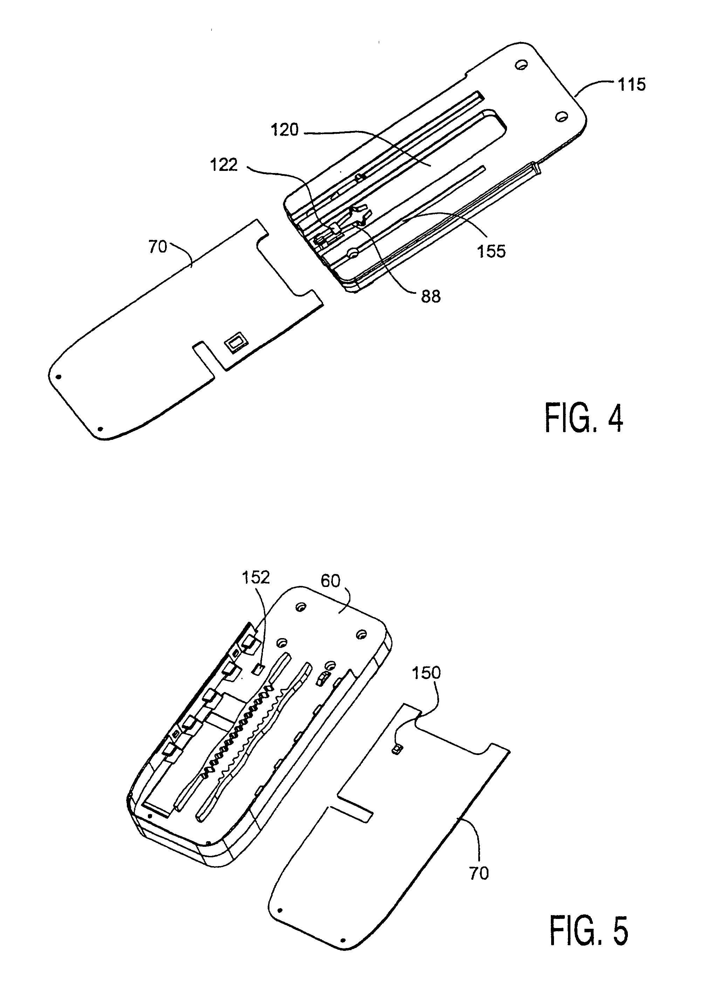

La figure 4 illustre la manière dont le système à ressort est rendu solidaire de la partie de boîtier 15. Cette figure 4 montre le couvercle 115 retourné. Le système est placé dans une gorge120. Une tête de fixation 122 le maintient plaqué contre le fond de cette gorge.

La figure 5 montre comment peut être réalisé un système de détection de position. Celui-ci est réalisé à partir d'un interrupteur 150 soudé sur le circuit imprimé 70. Cet interrupteur est muni d'une tige de commande qui passe au travers d'un trou 152 ménagé dans la partie 60. Cette tige dépasse d'une certaine hauteur de sorte qu'une glissière 155 (Figure 4) ménagée dans la partie 115 laisse cette tige à sa position, mais lorsque la glissière, par suite du mouvement de position déployée/repliée termine sa course, la glissière n'est plus présente de sorte que la face de la partie 115 vient appuyer sur la tige pour changer l'état de l'interrupteur 150. Ainsi la partie électronique placée sur le circuit 70 qui gère l'écran 10 pourra fournir les informations qui conviennent aux deux formats d'écran.

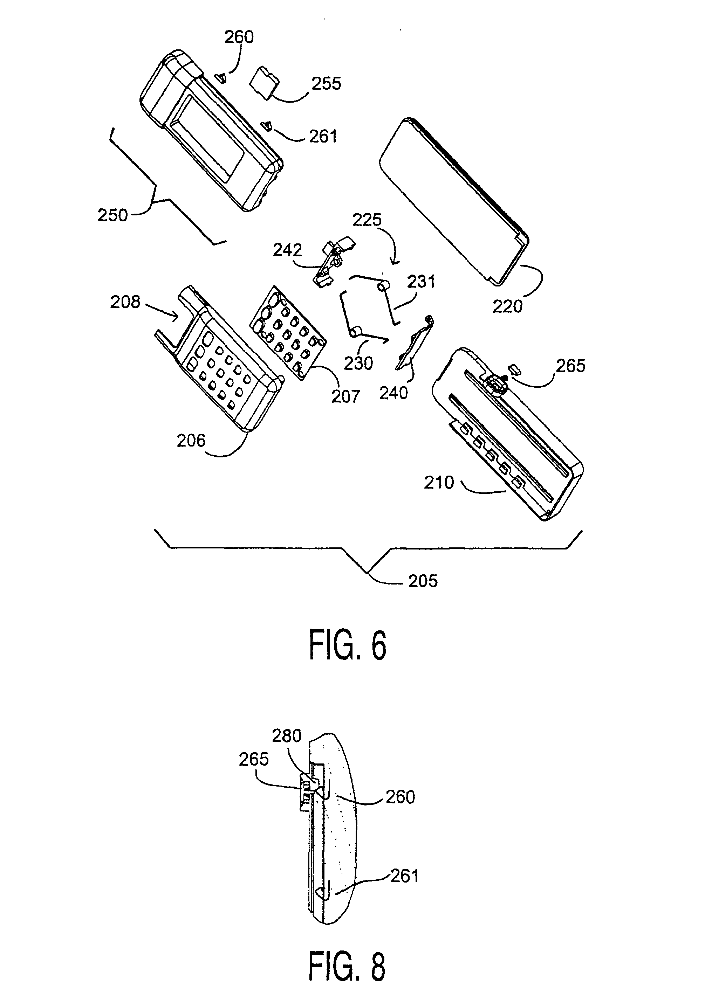

La figure 6 montre une vue éclatée d'un deuxième exemple de réalisation d'un appareil conforme à l'invention. La première partie de boîtier 205 se décompose en une face avant 206 sur laquelle sont placées les touches du clavier 207. C'est sur cette face avant qu'a été ménagée l'échancrure 208. Cette partie 205 comporte aussi un corps de boîtier 210 au dos duquel vient se fixer un couvercle 220 pouvant contenir ou protéger un accumulateur (non représenté). Sur cette première partie vient se fixer un ensemble à ressort hélicoïdal 225 formé de deux ressorts 230 et 231 de ce type venant sur leur première extrémité prendre appui sur une première plaque 240 qui est solidaire de cette première partie de boîtier 205 et venant sur leur deuxième extrémité prendre appui sur une deuxième plaque 242 qui vient pousser la deuxième partie de boîtier 250. Une pièce de connexion électrique 255 est prévue pour assurer les liaisons électriques entre ces deux partie de boîtier 205 et 250. Sur la partie 250 sont fixées deux verrous 260 et 261 formé, chacun, d'une lamelle à ressort. Ces verrous coopèrent avec un bouton de verrouillage 265. Ainsi ces verrous fixent deux positions pour le déplacement de la partie 250 vis-à-vis de la partie 205. Le déplacement de ces deux parties est assuré par des glissières, de la même manière que décrit pour le premier exemple de réalisation montré aux figures 1 à 5.

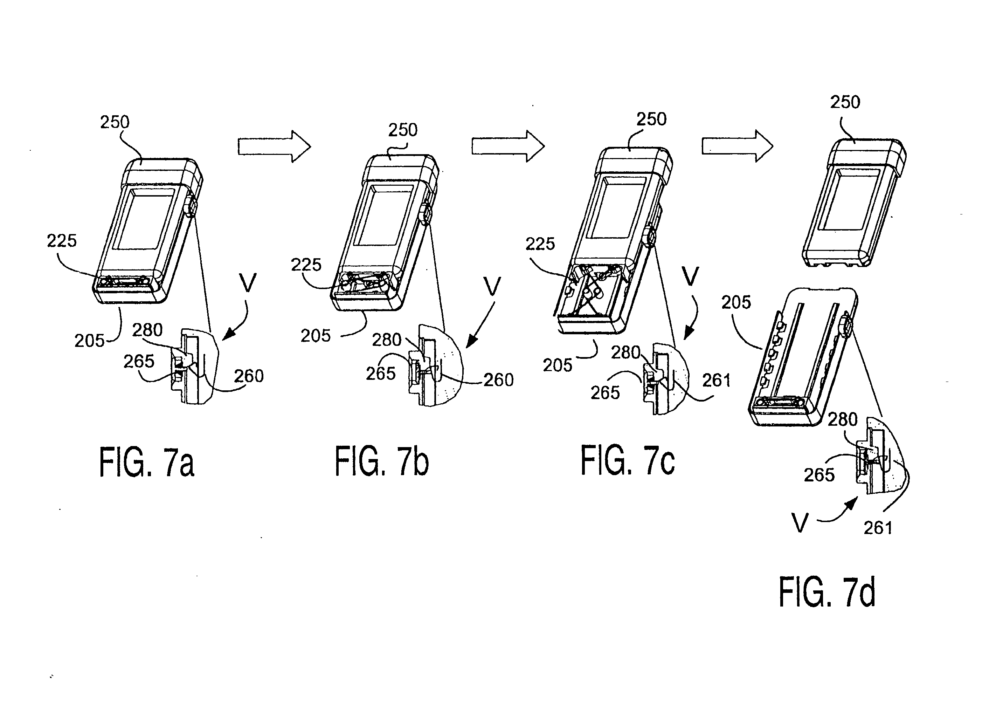

La figure 7 montre le fonctionnement de ce deuxième exemple de réalisation. Les différentes références a, b, c et d montrent les différentes positions que peut occuper la première partie de boîtier 205 vis-à-vis de la deuxième partie 250.

En "a", l'appareil est en position repliée. Il est maintenu dans cette position par le verrou 260 qui vient sur une butée 280 ménagée sur la partie 205. Ceci est montré par la vue V rattachée à chacune desdites références. Cette vue montre plus en détail le fonctionnement des verrous 260 et 261 coopérant avec la butée 280.

En "b", on appuie sur le bouton 265. Une pression sur celui-ci dégage le verrou de la butée. L'ensemble à ressort 225 écarte la partie 250 de la partie 205. Cette détente de l'ensemble 225 est bien perceptible sur cette figure 7.

En "c", cette détente est stoppée par le deuxième verrou 261 qui vient se coincer sur la butée 280.

En "d", si on appuie à nouveau sur le bouton 265, alors il est possible de désolidariser les deux parties de boîtier 205 et 250.

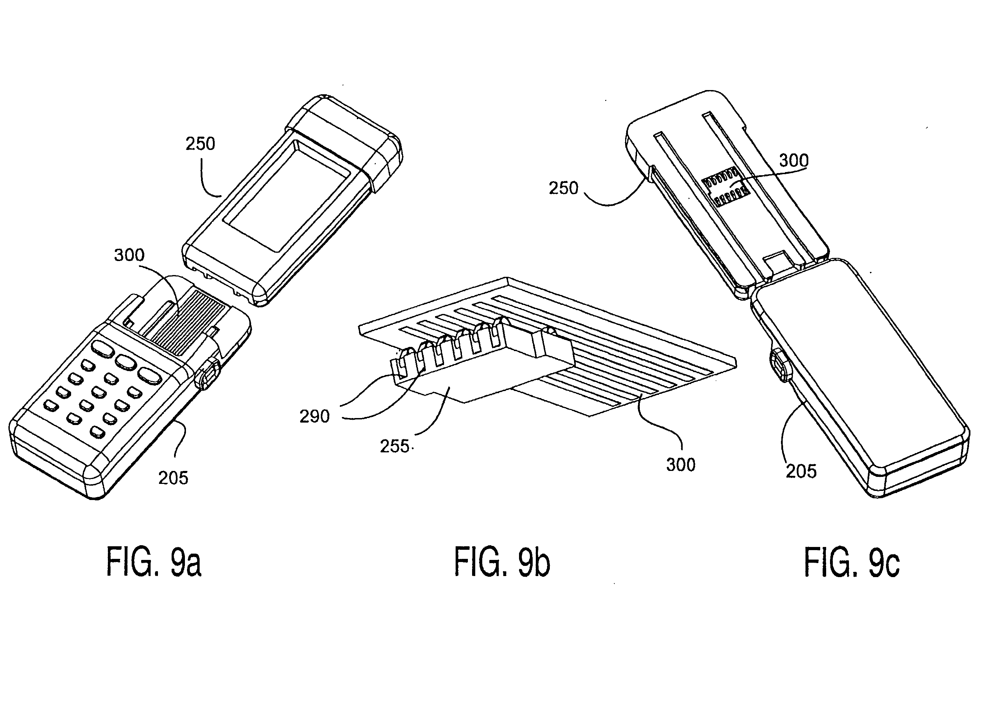

La figure 8 montre la disposition relative des verrous 260 et 261 avec la butée 280 coopérant avec le bouton 265.

La figure 9 montre comment les connexions électriques sont assurées dans ce deuxième exemple de réalisation.

En "a", sur cette figure les deux parties 205 et 250 sont représentées dégagées l'une de l'autre afin de laisser voir un ensemble de conducteurs 300 formant pistes, disposés sur la partie 205.

En "b", on voit mieux comment la pièce de connexion 255 assure sa fonction. Elle est munie de conducteurs 290 formés d'une partie saillante destinée à faire le contact avec l'ensemble de conducteurs 300 et d'une partie latérale pour assurer les contacts avec la partie de boîtier 250. A cet effet est prévu un logement 300 muni de contacts pour les liaisons électriques des partie latérales des conducteurs 290.

## Revendications

1. Appareillage électronique comportant un boîtier formé au moins de deux parties de boîtier dont une dite partie d'écran (250) est solidaire d'un écran rétractable pouvant occuper une première position dite position repliée et une deuxième position dite déployée vis-à-vis d'une partie dite partie fixe (205), pour lequel ladite partie d'écran est montée sur des glissières en vue de permettre son déplacement, et pour lequel il est prévu des "points durs" lors du déplacement de ladite partie d'écran afin qu'elle puisse occuper des positions stables, **caractérisé en ce que** les positions de l'écran entre deux positions sont assurées par des verrous (260, 261) déverrouillables par un bouton (265).

2. Appareillage électronique selon la revendication 1 **caractérisé en ce que** les verrous permettent de désolidariser les deux parties du boîtier.

3. Appareillage électronique selon l'une des revendications 1 ou 2, **caractérisé en ce que**, dans la position dite repliée, la partie fixe masque partiellement l'écran.

## Claims

1. An electronic apparatus comprising a housing formed by at least two housing parts of which one, referred to as screen part (250), is integral with a retractable screen which can occupy a first position, referred to as folded position, and a second position, referred to as unfolded position, relative to a part, referred to as fixed part (205), for which said screen part is mounted on slides to allow its displacement, and for which it is provided with "hard points" when said screen part is displaced so that it can occupy stable positions, **characterized in that** the positions of the screen between two positions are ensured by latches (260, 261) that can be unlocked by a button (265).

2. An electronic apparatus as claimed in claim 1, **characterized in that** the latches allow disengagement of the two parts of the housing.

3. An electronic apparatus as claimed in claim 1 or 2, **characterized in that**, in the folded position, the fixed part partly masks the screen.

## Patentansprüche

1. Elektronisches Gerät mit einem Gehäuse, gebildet aus mindestens zwei Gehäuseteilen, von denen einer mit der Bezeichnung Anzeigevorrichtungsteil (250) fest mit einer einklappbaren Anzeigevorrichtung verbunden ist, die eine erste Position mit der Bezeichnung eingeklappte Position und eine zweite Position mit der Bezeichnung ausgeklappte Position hinsichtlich eines Teiles mit der Bezeichnung fester (205) Teil einnehmen kann, für den der besagte Anzeigevorrichtungsteil auf Gleitschienen montiert ist, um seine Versetzung zu ermöglichen und wofür bei der Versetzung des besagten Anzeigevorrichtungsteils "Haltepunkte" vorgesehen sind, um ihm die Einnahme von stabilen Positionen zu ermöglichen, **dadurch gekennzeichnet, dass** die Positionen der Anzeigevorrichtung zwischen zwei Positionen von mit einem Knopf (265)entriegelbaren Verriegelungen (260, 261) versichert werden.

2. Elektronisches Gerät nach Anspruch 1, **dadurch gekennzeichnet, dass** die Verriegelungen die Trennung der beiden Gehäuseteile ermöglichen.

3. Elektronisches Gerät nach einem der Ansprüche 1 oder 2, **dadurch gekennzeichnet, dass** in der sogenannten eingeklappten Position der feste Teil teilweise die Anzeigevorrichtung verdeckt.
